# EUROPEAN PATENT SPECIFICATION

(11) **EP 0 398 532 B1**
(45) Date of publication and mention of the grant of the patent: **22.03.1995**
(21) Application number: 90304573.0
(22) Date of filing: 26.04.1990
(51) Int. Cl.: B60T 8/42, F16B 1/04, F16D 49/04, F16D 59/00

(54) **Anti-lock braking system**
Blockierschutz-Bremssystem
Système de freinage à antiblocage

(30) Priority: 17.05.1989 US 353320
(43) Date of publication of application: 22.11.1990
(73) Proprietor: GENERAL MOTORS CORPORATION, Detroit Michigan 48202 (US)
(72) Inventor: Matouka, Michael F., Utica, Michigan 48087 (US); Wilkey, Paul D., Vandalia, Ohio 45377 (US); Rajput, Yudh V., Xenia, Ohio 45385 (US); Bright, James A., Dayton, Ohio 45459 (US)
(74) Representative: Denton, Michael John

(56) References cited:
- EP-A- 0 226 065
- DE-A- 3 312 968
- DE-A- 3 322 422
- US-A- 4 756 391

## Description

The field of the present invention is that of anti-lock braking systems (ABS) for automotive vehicles, to a pressure modulator therefor, and to a pressure actuator for the modulator.

Anti-lock braking systems typically modulate the pressure delivered to a wheel brake to prevent the vehicle wheel from locking up in the braking condition. Two prior anti-lock braking systems are shown in US Patent Nos. 4,653,815 and 4,756,391. In both of the aforementioned systems, an electronic controller signals a motor which is gearably engaged with a driven member which is in turn threadably engaged with an actuator piston, piston movement is used to modulate the pressure delivered to the wheel brakes of the vehicle.

A similar arrangement, in accordance with the preamble of Claim 1, is disclosed in DE-A-3322422. This arrangement has no means for preventing back drive of the actuator piston during normal braking.

A pressure actuator in accordance with the present invention is characterised over DE-A-3322422 by the features specified in the characterising portion of Claim 1.

The present invention provides an anti-lock braking system which is an alternative to the aforementioned prior art anti-lock braking systems in the US patents. To reduce the space envelope of the aforementioned systems, the present invention in a preferred embodiment provides a piston which is attached to a non-rotative nut which is threadably engaged by a power screw rather than having the piston attached to a non-rotative screw which is engaged by a rotative nut. The above modification allows the present invention to provide anti-lock braking systems wherein the components are smaller and wherein there is less rotative mass, thereby greatly reducing the angular inertia of the anti-lock braking system.

Furthermore, in a preferred embodiment, the present invention provides an actuator with a check valve providing an alternative flow path from the master cylinder to the wheel brake (cylinder). The check valve is opened by the piston itself. Therefore, there is an alternative flow path to the wheel brake should the isolation valve malfunction.

To maximize reaction speed, a high efficiency thread is utilized between the power screw and the non-rotative nut. Therefore, pressure within the actuator can back drive the piston. In the preferred embodiment the present invention is configured in such a manner that the piston, in its extreme position, opens the check valve when the system is not in the ABS mode of operation. The piston can be held with an inefficient screw. However, it has been found preferable to use an efficient screw (to lower the current required by the DC motor). Therefore, to make the present invention work, there must be some means of holding the piston at its extreme position when it is exposed to master cylinder pressure, but not within the ABS mode wherein the DC motor is being powered. Space limitations under the hood of a vehicle require that the solution to the above need take up as little space as possible.

One method to prevent back drive of the piston is to use an electromagnetic brake which restrains movement of the rotor shaft of the DC motor. Such an anti-lock braking system is disclosed in our copending patent application no. 90304572.2 (0398531A), filed the same day as the present application. The present invention provides an anti-lock braking system which is an alternative to that found in the above mentioned application.

The present invention will now be described, by way of example, with reference to the accompanying drawings, in which:-
FIGURE 1 is a schematic view show partially in section of a preferred embodiment of the present invention for one wheel brake;
FIGURE 2 is a sectional view illustrating details of the anti-lock braking system illustrated in FIGURE 1;
FIGURES 3 and 4 are views taken along lines 3-3 and 4-4 respectively of FIGURE 2;
FIGURE 5 is a view illustrating the driver rotated from the position shown in FIGURE 4;
FIGURE 6 is an exploded view of the coil spring, driver and pinion gear utilized in the anti-lock braking system of Figure 1;
FIGURES 7, 8 AND 9 are views taken along lines 7-7, 8-8 and 9-9, respectively, of FIGURE 6;
FIGURE 10 is a view taken along line 10-10 of FIGURE 9; and
FIGURE 11 is a side elevational view of the driver illustrated in FIGURES 2, 6, 9 and 10.

The vehicle wheel anti-lock braking system (ABS) 7 of the present invention includes a master cylinder 12 for supplying pressurized fluid. Connected on a wheel 14 and schematically shown, is a fluid activated wheel brake cylinder 16 (hereinafter referred to as a wheel brake) which receives pressurized fluid from the master cylinder 12 for restraining rotational movement of the wheel 14. The wheel brake 16 may be utilized in a conventional drum or disc type vehicle brake. A brake pedal 22 controlled by the vehicle operator actuates the master cylinder 12.

An (electronic) controller 18 is also provided. A sensor 20 in the wheel brake 16, determines the wheel 14 rotational speed and a sensor (not shown) determines whether or not the brake pedal 22 of the vehicle is activated. Both sensors feed information to the controller 18. The controller 18 will be cognizant of the rotational condition of the wheel and will provide an appropriate signal in response thereto. The signal will place the anti-lock braking system 7 in an ABS mode of operation if the condition of the wheel 14 is within preset parameters.

A (normally open) solenoid valve 24, when activated to a closed position in response to a signal given by the controller 18, functions as an isolation valve to prevent fluid communication between the master cylinder 12 and the wheel brake 16. An actuator 28 is provided having an actuator body 30 with a longitudinal bore 32. An actuator can be provided for each wheel brake of the vehicle or if desired, a plurality of wheel brakes can be connected to a single actuator. The longitudinal bore 32 has a first fluid passage 42 allowing fluid communication between the wheel brake 16 and the longitudinal bore 32 and also has fluid communication with the master cylinder 12 when the solenoid valve 24 is not activated to the closed position via second fluid passage 40. Additionally, as shown, the longitudinal bore 32 has an alternative fluid communicative path with the master cylinder 12 by way of third fluid passage 34. Fluid flow passes over a transverse slot (not shown) of a piston 44. However, the solenoid valve 24 could directly tie into the wheel brake 16 and first fluid passage 42 could "T" into that line. The third fluid passage 34 has a check valve 38 for interrupting fluid flow between the master cylinder (12) and the wheel brake 16. The check valve 38 allows delivery of fluid back to the master cylinder 12 whenever the wheel brake 16 has a pressure greater than that in the master cylinder 12. Therefore, the anti-lock braking system 7 is sensitive to an operator relieving the wheel brake 16 by removing his or her foot from the brake pedal 22 without any needed input from the controller 18.

The piston 44 is slidably and sealably mounted within the longitudinal bore 32. Movement of the piston 44 provides a variable control volume in communication with the wheel brake 16, thereby modulating the pressure therein. A nut 46 operatively associated with piston 44 is connected with the piston 44 and the nut 46 is slidably mounted within the longitudinal bore 32 in a non-rotative fashion.

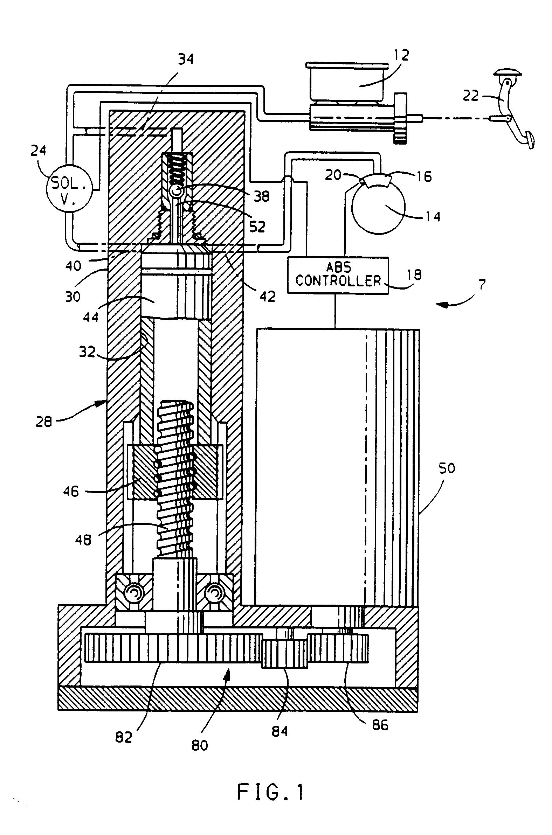

A power screw 48 projects into the nut 46 and is threadably engaged therewith in an efficient manner. The power screw 48 has a fixed rotational axis with respect to the actuator body 30. Powering the power screw 48 is a (reversible) DC motor 50 which is responsive to the signals given to it by the controller 18. In the position shown, for normal braking operation, the piston 44 is held at the extreme up position and must be held within a tolerance of 0.762mm (3/100 of an inch) to maintain the check valve 38 in the open position via a rod 52 (tolerances shown in Figure 1 are greatly enlarged for purposes of illustration).

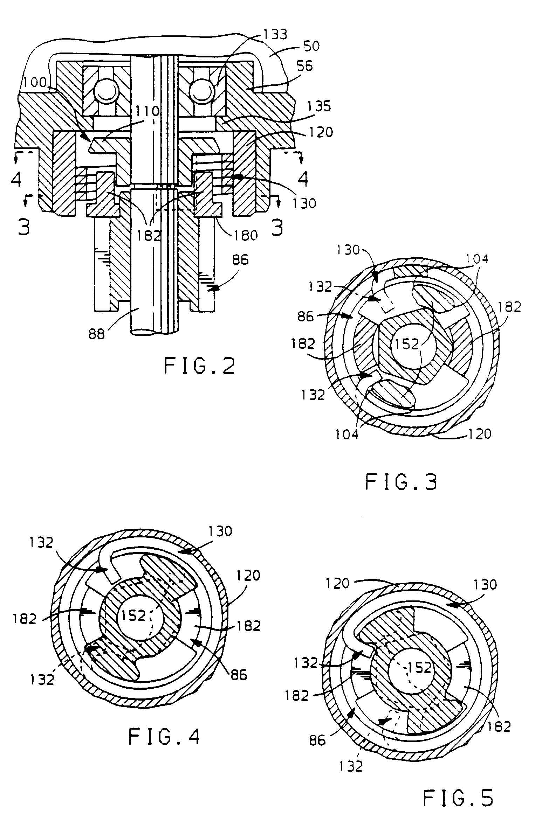

The power screw 48 is connected to a gear train 80 which is in turn also connected with the DC motor 50. The power screw 48 is mounted by bearings and has a end (large) gear 82 connected to the end thereto. The (large) gear 82 meshes with an idler gear 84 which in turn meshes with a (smaller) pinion gear 86. The pinion gear 86, which defines a driven member, axially floats on one end of a rotor shaft 88 of the DC motor 50 and is held on by a spring clip (not shown). Fixably connected to the rotor shaft 88 between the DC motor 50 and the pinion gear 86 is a driver member 100 (herein after referred to as the driver). The driver 100 (Figure 2) has a flange portion 110 directed towards the DC motor 50 and is symmetrical and rotationally balanced. The driver 100 also has four tang contact surfaces 104 (Figure 3) whose function will be described later. The driver 100 has an angular position which corresponds with the position of the rotor shaft 88.

Generally surrounding the driver 100 and located between the DC motor 50 and the power screw 48 (in the example shown) adjacent to the DC motor is a sleeve 120 having a location generally fixed with respect to the DC motor 50.

The sleeve 120 has a generally smooth sliding surface on its interior and has an inner diameter of a first value. A coil spring 130 which has a free outer diameter of a second value equal to or greater than said first value is captured within the (non-rotative) sleeve 120. The coil spring 130 at both ends has a generally (radially inwardly projecting) tang 132 with a radius curvature equal to the spring thickness. The tangs 132 will project inward intersecting a line tangent with the sleeve 120 at angle less than 90 degrees and at their inner most radial portion 134 have a generally straight section 136. Typically, the coil spring 130 will be made with piano wire with a square or rectangular cross-sectional shaped area.

The DC motor 50 has a housing 56 having a three diameter inner bore. In the inward inner diameter of the bore a bearing 133 is press-fitted therein. The bearing 133 mounts the rotor shaft 88. The rotor shaft 88 projects outwards and has the driver 100 keyed, splined, or pressed fitted to it.

Separated by a land 135 in the housing 56 inner bore from the bearing 133 and press-fitted in its third interior diameter is the sleeve 120.

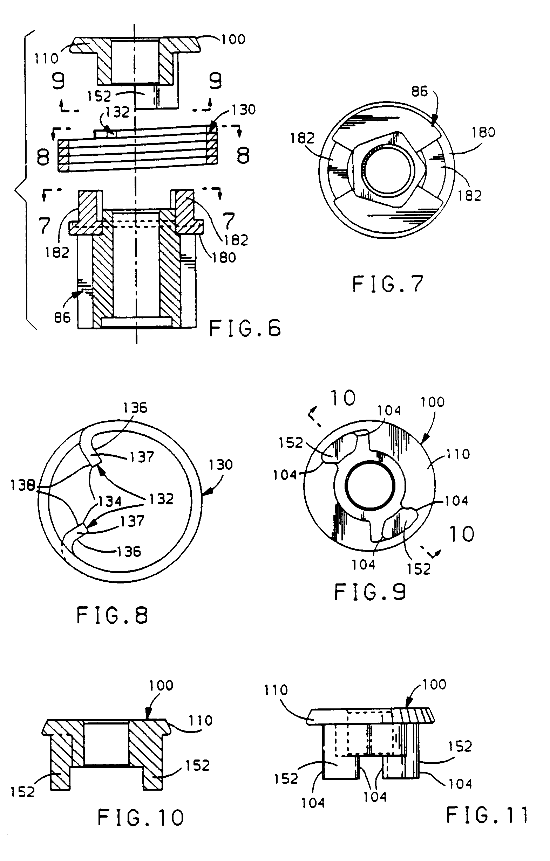

Lockably engaged with the sleeve 120 is the coil spring 130 with its two (radially inwardly facing) tangs 132. The tangs 132 are configured in such a manner that rotation of the driver 100 causes the tang contact surface 104 to pull the tangs 132 radially inward, thereby causing the coil spring 130 to contract, and allow the rotor shaft 88 to turn, and therefore transfer torque to the pinion gear 86 and thereafter to the power screw 48. The pinion gear 86 is axially slidable upon the end of the rotor shaft 88, however, it has a snap ring (not shown) which connects it thereto. The axial sliding movement is provided so that thermal expansion will not cause the pinion gear 86 to make contact with the sleeve 120 or the housing 56. The pinion gear 86 has a flange 180 and the coil spring 130 is axially captured between the flanges 110,180 of the driver 100 and the pinion gear 86. The pinion gear 86 also has lobe (torque transfer) portions 182 which project into the sleeve 120. The lobe portions 182 are contacted by (torque transfer) portions 152 of the driver 100 to transfer torque between the members. However, the pinion gear 86 typically will have two lobe portions 182 but only needs to have one. One lobe portion 182 must provide a surface to make contact with one of the tangs 132 on the opposite side 138 of the tang to that contacted by the contact surface 104 to cause tang 132 to move outwardly to expand the coil spring 130 and thereby lock the DC motor 50. The locking action is provided when the piston 44 is in its extreme position as shown in Figure 1. Therefore, from the above-described extreme position, rotating downward or in other word, retractive movement of the piston 44 caused by fluid pressure within the longitudinal bore 32 will cause the lobe portion 182 on the pinion gear 86 to hit the tang 132 on the opposite side 138 (FIGURE 8) to that contacted by the contact surface 104, causing the tang 132 to be forced outward, expanding the coil spring 130 and preventing transfer torque from the power screw 48 back to the rotor shaft 88, thereby locking the piston 44 in its extreme position within 0.764mm (3/100 of an inch) from the top. Therefore, the check valve 38 is maintained in an open position. In most applications, locking of the location of the piston 44 as from its lower extreme position will not be relevant.

The coil spring 130 is configured in such a manner that once one of the rotor shaft 88 (or driver 100) contact surface 104 is in contact with the tang 132, the rotor shaft only has to turn approximately 5 more to release the coil spring 130. The torque transfer portion 152 of the driver 100 will start turning the pinion gear 86, before the lobe portions 182 can contact the tang 132 of the coil spring. Therefore, when the DC motor 50 is driving the piston 44 upward, there is isolation of the tang 132 from the lobe portions 182 from a fraction of a degree to approximately 5 degrees in a preferred embodiment of the invention as illustrated in FIGURES 3-5. In other words, tang isolation means that the tang 132 is not sandwiched between the torque transfer portion 152 and the lobe portions 182.

First, the tang isolation is important in that when the DC motor 50 is driving the piston 44, the rotor shaft 88 will start turning the pinion gear 86 before making contact with the tang 132 and, therefore, torsional slip between the pinion gear 86 and the driver 100 will not cause a chattering effect on the tang 132 of the coil spring 130 (the tang 132 is one of the most critical components in this ABS 7 in regards to reliability) and, therefore, coil spring 130 life is preserved. Secondly, when the DC motor 50 drives the piston 44 to its up extreme position, there is an impact force and the DC motor 50 will stall. However, instantaneously the actuator body 30 will be loaded in tension. Instantaneously, the spring tension of the actuator body 30 will cause a backward force or rearward force on the pinion gear 86, kand the pinion gear will rotate slightly before the surface of its lobe portion 182 will come in contact with the opposite side 138 of the tang 132. The tang isolation allows the pinion gear 86 to back-lash a few degrees to relieve tension in the actuator body 30 before the lobe portion 182 locks up against the tang 132 (lock up occurs in 1-5 degrees). Therefore, although the pinion gear 86 can reverse slightly (relieving tension in the actuator body 30), it is not as much as to allow the check valve 38 to close. Without the tang isolation, the reverse movement of the pinion gear 86 would not be possible. Without tang isolation the tang 132 will be instantly loaded and the piston 44 will remain in comoression and in a position of tension loading the actuator body 30 which places the whole gear train 80 under a high retained load in the non-ABS mode of operation (normal brake operation).

The tang contact surface 104 of the driver 100 is configured in such a manner as to impact a force to the tang 132 normal to the generally straight portion 136. The rounded tang contact surface 104 provides almost point contact, imparting a force which also goes through the centre of percussion 137 of the tang 132. Therefore, vibration of the tang 132 with respect to the tang contact surface 104 is minimized and tang 132 life is prolonged. The inward bend of less than 90 helps to prevent any tendency of the tang 132 to straighten out since the straight section 136 is less than 90 from the tangent. In other words, there is a small component of force directed inwards which tends to pull the coil spring 130 away from the sleeve 120. It has also been found to be preferable that the radius of the tang 132 bend be in the neighbourhood of 1 times the thickness of the wire of the coil spring 130 measured in the radial direction.

The present invention provides an ABS 7 which has a path from the master cylinder 12 to the wheel brake 16 other than through the solenoid valve 24. This allows the wheel brakes to be applied in the case of solenoid valve 24 failure. In normal operation, fluid from the master cylinder 12 can go past the check valve 38 and/or through the solenoid valve 24 into the longitudinal bore 32 and then out to the wheel brake 16. Build up of fluid pressure in the longitudinal bore 32 will tend to act on the piston 44 to try to move it downwards (Figure 1). In order to prevent this movement the spring clutch brake provided by the coil spring 130, sleeve 120, tangs 132, tang contact surfaces 104 and lobe portions 182 act to prevent rotation of the rotor shaft 88, thereby preventing rotation of the gear train 80 and power screw 44, thereby holding the piston 44 in position.

During operation of the ABS 7, the solenoid valve 24 is closed. The piston 44 is moved by the DC motor 50 to close the check valve 38 and then to vary the volume of a control volume defined by part of the longitudinal bore 32 to modulate the fluid pressure applied to the wheel brake 16.

During this operation, the tang contact surfaces 104 engage the tangs 132 of the coil spring 130 to contact the coil spring and pull it away from sleeve 120. This allows the rotor shaft 88 to rotate freely.

## Claims

1. A pressure actuator for a vehicle wheel braking system including a master cylinder (12) for supplying pressurized fluid; a wheel brake (16) receiving pressurized fluid from the master cylinder and for restraining rotational movement of a wheel (14); and a controller (18) cognizant of the rotational condition of the wheel and providing a signal when the rotational condition of the wheel is within preset parameters; the pressure actuator (28) comprising an actuator body (30) having a bore (32) with a first fluid passage (42) in fluid communication with the wheel brake; a piston (44) slidably sealably mounted within the bore for providing a variable control volume in communication with the wheel brake and thereby modulating the pressure therein; a nut (46) operatively associated with the piston and slidably mounted within the bore in a non-rotative manner; a power screw (48) projecting into the nut and threadedly engaged therewith, the power screw having a fixed rotational axis with respect to the piston; and a reversible motor (50) for powering the power screw, the reversible motor being responsive to signals given by the controller; characterised by a sleeve (120) which is non-rotative and located between the power screw (48) and the reversible motor (50) in a fixed position, the sleeve having an inner diameter of a first value; a coil spring (130) having a free outer diameter of a second value generally equal to or greater than the first value, the coil spring being captured within the sleeve, and having a tang (132) on each end; a driver member (100) with a torsion transfer portion (152) projecting into the sleeve, the driver member having a rotational axis, the driver member having an angular position in correspondence with the angular position of the reversible motor, the driver member having first and second contact surfaces (104) for engagement with the tangs to cause the tangs to move inwardly to allow the coil spring to have sliding movement within the sleeve in both directions; a driven member (86) with an angular position in correspondence with the angular position of the power screw, the driven member having a rotational axis generally co- terminous with the rotational axis of the driver member and the driven member having a torsion transfer portion (182) for making contact with the torsion transfer portion (152) of the driver member for transferring torque from the driver member to the power screw, the driven member having at least one contact surface for making contact with the tang on the opposite side (138) of the tang to that contacted by the contact surface of the driver member to cause the coil spring to radially expand and lock within the sleeve to prevent torque from the power screw being transferred to the reversible motor when the piston is subjected to fluid pressure but the rotational condition of the wheel is outside the preset parameters.

2. A pressure modulator comprising a pressure actuator as claimed in Claim 1 and a controller (18) cognizant of the rotational condition of the wheel (14) and providing the signal to the reversible motor (50) when the rotational condition is within the preset parameters to modulate the pressure in the wheel brake (16).

3. An anti-lock braking system (ABS) comprising a pressure modulator as claimed in Claim 2; a master cylinder (12) for supplying pressurized fluid; the wheel brake (16) receiving pressurized fluid from the master cylinder and for restraining rotational movement of the wheel (14); and an isolation valve (24) responsive to an activation signal given by the controller to prevent fluid communication between the master cylinder and the wheel brake.

4. An anti-lock braking system as claimed in Claim 3, wherein the actuator (28) has a second fluid passage (40) in fluid communication with the isolation valve (24) and a third fluid passage (34) in direct fluid communication with the master cylinder (12).

5. An anti-lock braking system as claimed in Claim 4, wherein the actuator (28) has a check valve (38) in the third fluid passage (34) for controlling fluid communication between the master cylinder (12) and the wheel brake (16), the piston (44) engaging the check valve in an extreme position to open the check valve.

6. An anti-lock braking system as claimed in any one of Claims 3 to 5, wherein the driver member (100) is fixably connected with a rotor shaft (88) of the reversible motor (50) and the sleeve (120) is generally adjacent to the reversible motor, and the driven member (86) is a gear of a gear train (80), connected with the power screw (48).

7. An anti-lock braking system as claimed in Claim 6 wherein the torsion transfer portion (152) of the driver member (100) is generally symmetrical and is rotationally balanced.

8. An anti-lock braking system as claimed in Claim 6 or Claim 7, wherein the gear (86) axially floats along its rotational axis with respect to the reversible motor (50).

9. An anti-lock braking system as claimed in any one of Claims 3 to 8, wherein the driver member (100) has a flange (110) on one end for axially locating the coil spring (130).

10. An anti-lock braking system as claimed in Claim 9, wherein the driven member (86) has a flange (180) for axially locating the coil spring (130).

11. An anti-lock braking system as claimed in any one of Claims 3 to 10, wherein the driven member (86) can reverse a predetermined amount from its position when the driver (100) member is driving the driven member before the torsion transfer portion (182) of the driven member makes contact with the tang (132) to restrain rotation of the power screw (48), and the tang (132) is isolated from contact with the driven member when the driver member is transferring torque to the driven member.

12. An anti-lock braking system as claimed in any one of Claims 3 to 11, wherein the torsion transfer portion (182) of the driven member (86) within the sleeve (120) is generally symmetrical and is rotationally balanced.

13. An anti-lock braking system as claimed in any one of claims 3 to 12, wherein the contact surfaces (104) of the driver member (100) are rounded.

14. An anti-lock braking system as claimed in any one of Claims 3 to 13, wherein the tangs (132) point generally in an inward radial direction.

15. An anti-lock braking system as claimed in Claim 14, wherein one of the tangs (132) has a bend radius approximating its thickness.

16. An anti-lock braking system as claimed in Claim 14 or Claim 15, wherein each tang (132) has a generally straight portion (136) in its innermost radial portion (134) and the contact surface (104) of the driver member (100) makes contact with said generally straight portion.

17. An anti-lock braking system as claimed in Claim 16, wherein the contact surface (104) imparts a force to the innermost radial portion (134) of the tang (132) normal to the innermost radial portion.

18. An anti-lock braking system as claimed in Claim 16 or Claim 17, wherein the contact surface (104) imparts a force to the tang (132) through the centre of percussion (137) of the tang to minimize vibration of the tang when the tang is driven by the driver member (100).

19. An anti-lock braking system as claimed in any one of Claims 16 to 18, wherein the generally straight portion (136) projects at an angle less than 90 when intersecting the radius of the sleeve (120).

20. An anti-lock braking system as claimed in any one of Claims 3 to 19, wherein the coil spring (130) has a rectangular cross-sectional area.

## Patentansprüche

1. Ein Druckbetätiger für ein Fahrzeugradbremssystem mit einem Hauptzylinder (12) zum Liefern von unter Druck stehendem Fluid; einer Radbremse (16), die unter Druck stehendes Fluid aus dem Hauptzylinder empfängt und zwar zum Begrenzen der Rotationsbewegung eines Rades (14); und einem Regler (18), der über den Rotationszustand des Rades unterrichtet ist und ein Signal vorsieht, wenn der Rotationszustand des Rades innerhalb voreingestellter Parameter liegt; wobei der Druckbetätiger (28) einen Betätigerkörper (30) mit einer Bohrung (32) mit einem ersten Fluiddurchtritt (42) in Fluidverbindung mit der Radbremse aufweist; einem Kolben (44), der gleitfähig dichtfähig innerhalb der Bohrung zum vorsehen eines variablen Regelvolumens in Verbindung mit der Radbremse und dadurch zum Modulieren des Drucks darin angebracht ist; einer Mutter (46), die operativ mit dem Kolben assoziiert ist und innerhalb der Bohrung in einer nicht drehenden Weise gleitfähig angebracht ist; einer Antriebsschraube (48), die in die Mutter vorsteht und damit gewindemäßig in Eingriff steht, wobei die Antriebsschraube eine feste Rotationsachse mit Bezug auf den Kolben aufweist; und einem umkehrbaren Motor (50) zum Antreiben der Antriebsschraube, wobei der umkehrbare Motor auf Signale anspricht, die durch den Regler gegeben werden; gekennzeichnet durch eine Hülse (120), welche nicht drehbar und zwischen der Antriebsschraube (48) und dem reversiblen Motor (50) in einer befestigten Position angeordnet ist, wobei die Hülse einen inneren Durchmesser eines ersten Wertes aufweist; eine Schraubenfeder (130) mit einem freien äußeren Durchmesser eines zweiten Wertes, der im allgemeinen dem erstem Wart gleich oder größer als dieser ist, wobei die Schraubenfeder innerhalb der Hülse eingefangen ist und einen Mitnehmer (132) auf jedem Ende aufweist; ein Antreiberglied (100) mit einem Torsionsübertragungsteil (152), das in die Hülse vorsteht, wobei das Antreibsglied eine Rotationsachse aufweist, das Antrieberglied eine Winkelposition entsprechend der Winkelposition des reversiblen Motors aufweist, das Antreiberglied erste und zweite Kontaktoberflächen (104) für den Eingriff mit den Mitnehmern aufweist, um die Mitnehmer dazu zu veranlassen, sich einwärts zu bewegen, um der Schraubenfeder zu ermöglichen, eine gleitende Bewegung innerhalb der Hülse in beiden Richtungen aufzuweisen; ein angetriebenes Glied (86) mit einer Winkelposition entsprechend der Winkelposition der Antriebsschraube, wobei das angetriebene Glied eine Rotationsachse aufweist, die im allgemeinen mit der Rotationsachse des Antreibergliedes koterminal ist, und das angetriebene Glied einen Torsionsübertragungsteil (182) zum Herstellen von Berührung mit dem Torsionsübertragungsteil (152) des Antreibergliedes zum Übertragen von Drehmoment von dem Antreiberglied zu der Antriebsschraube aufweist, das angetriebene Glied zumindest eine Berührungsoberfläche zum Herstellen von Berührung mit dem Mitnehmer auf der entgegengesetzten Seite (138) des Mitnehmers zu jener aufweist, die durch die Kontaktoberflache des Antreibergliedes berührt wird, um die Schraubenfeder dazu zu veranlassen, sich radial auszudehnen und innerhalb der Hülse zu sperren, um zu verhindern, daß Drehmoment von der Antriebeschraube zu dem reversiblen Motor übertragen wird, wenn der Kolben Fluiddruck ausgesetzt wird, aber der Rotationszustand des Rades außerhalb der voreingestellten Parameter liegt.

2. Ein Druckmodulator mit einem Druckbetätiger nach Anspruch 1 und einem Regler (18), der über den Rotationszustand des Rades (14) unterrichtet ist und das Signal an dem reversiblen Motor (50) vorsieht, wenn der Rotationszustand innerhalb der voreingestellten Parameter liegt, um den Druck in der Radbremse (16) zu modulieren.

3. Ein Antiblockierbremssystem (ABS) mit einem Druckmodulator nach Anspruch 2; einem Hauptzylinder (12) zum Liefern von unter Druck stehendem Fluid, wobei die Radbremse (16) unter Druck stehendes Fluid aus dem Hauptzylinder empfängt und zwar zum Beschränken der Rotationsbewegung des Rades (14); und einem Isolationsventil (24), das auf ein Aktivierungssignal anspricht, das von der Regelung gegeben wird, um Fluidverbindung zwischen dem Hauptzylinder und der Radbremse zu verhindern.

4. Ein Antiblockierbremssystem nach Anspruch 3, worin der Betätiger (28) einen zweiten Fluiddurchtritt (40) in Fluidverbindung mit dem Isolationsventil (24) und einen dritten Fluiddurchtritt (34) in direkter Fluidverbindung mit dem Hauptzylinder (12) aufweist.

5. Ein Antiblockierbremssystem nach Anspruch 4, worin der Betätiger (28) ein Rückschlagventil (38) in dem dritten Fluiddurchtritt (34) zum Regeln von Fluidverbindung zwischen dem Hauptzylinder (12) und der Radbremse (16) aufweist, wobei der Kolben (44) mit dem Rückschlagventil in einer Extremposition in Eingriff steht, um das Rückschlagventil zu öffnen.

6. Ein Antiblockierbremssystem nach einem der Ansprüche 3 bis 5, worin das Antreiberglied (100) drehbar mit einer Rotorwelle (88) des reversiblen Motors (50) verbunden ist, und die Hülse (120) dem reversiblen Motor im allgemeinen benachbart ist, und das angetriebene Glied (86) ein Zahnrad eines Zahnradzuges (80) ist, der mit der Antriebsschraube (46) verbunden ist.

7. Ein Antiblockierbremssystem nach Anspruch 6, worin der Torsionsübertragungsteil (152) des angetriebenen Gliedes (100) im allgemeinen symmetrisch und rotationsmäßig ausgeglichen ist.

8. Ein Antiblockierbremssystem nach Anspruch 6 oder Anspruch 7, worin das Zahnrad (86) axial längs seiner Rotationsachse mit Bezug auf den reversiblen Motor (50) schwimmt.

9. Ein Antiblockierbremssystem nach einem der Ansprüche 3 bis 8, worin dar Antreiberglied (100) einen Flansch (110) auf einem Ende zur axialen Anordnung der Schraubenfeder (130) aufweist.

10. Ein Antiblockierbremssystem nach Anspruch 9, worin das angetriebene Glied (86) einen Flansch (180) zum axialen Anordnen der Schraubenfeder (130) aufweist.

11. Ein Antiblockierbremssystem nach einem der Ansprüche 3 bis 10, worin das angetriebene Glied (86) ein vorbestimmtes Maß von seiner Position umkehren kann, wenn das Antreiber-(100-)Glied das angetriebene Glied antreibt, bevor der Torsionsübertragungsteil (182) des angetriebenen Gliedes Berührung mit dem Mitnehmer (132) herstellt, um die Rotation der Antriebsschraube (48) zu begrenzen, und der Mitnehmer (132) von Berührung mit dem angetriebenen Glied isoliert ist, wenn das Antreiberglied Drehmoment an das angetriebene Glied überträgt.

12. Ein Antiblockierbremssystem nach einem der Ansprüche 3 bis 11, worin der Torsionsübertragungsteil (182) des angetriebenen Gliedes (86) innerhalb der Hülse (120) im allgemeinen symmetrisch und rotationsmäßig ausgeglichen ist.

13. Ein Antiblockierbremssystem nach einem der Ansprüche 3 bis 12, worin die Kontaktoberflachen (104) des Antreibergliedes (100) abgerundet sind.

14. Ein Antiblockierbremssystem nach einem der Ansprüche 3 bis 13, worin die Mitnehmer (132) im allgemeinen in eine radiale Einwärts-Richtung zeigen.

15. Ein Antiblockierbremssystem nach Anspruch 14, worin einer der Mitnehmer (132) einen Biegeradius aufweist, der sich seiner Dicke nähert.

16. Ein Antiblockierbremssystem noch Anspruch 14 oder 15, worin jeder Mitnehmer (132) einen allgemein geraden Teil (136) in seinem innersten radialen Teil (134) aufweist und die Kontaktoberfläche (104) des Antreibergliedes (100) Berührung mit dem allgemein geraden Teil herstellt.

17. Ein Antiblockierbremssystem nach Anspruch 16, worin die Kontaktoberfläche (104) eine Kraft auf das innerste radiale Teil (134) des Mitnehmers (132) normal zu dem innersten radialen Teil aufprägt.

18. Ein Antiblockierbremssystem nach Anspruch 16 oder Anspruch 17, worin die Kontaktoberfläche (104) eine Kraft an den Mitnehmer (132) durch die Aufschlagsmitte (137) des Mitnehmers aufprägt, um die Vibration des Mitnehmers zu minimieren, wenn der Mitnehmer durch das Antreiberglied (100) betrieben wird.

19. Ein Antiblockierbremssystem nach einem der Ansprüche 16 bis 18, worin das allgemein gerade Teil (136) in einem Winkel kleiner als 900, wenn es mit dem Radius der Hülse (120) geschnitten wird, vorsteht.

20. Ein Antiblockierbremssystem nach einem der Ansprüche 3 bis 19, worin die Schraubenfeder (130) eine rechteckige Querschnittsfläche aufweist.

## Revendications

1. Organe de manoeuvre par pression destiné à un dispositif de freinage de roue de véhicule, comprenant un maître-cylindre (12) destiné à transmettre un fluide sous pression, un frein (16) de roue qui reçoit du fluide sous pression du maître-cylindre et destiné à limiter le mouvement de rotation de la roue (14), et un organe de commande (18) avisé de l'état de rotation de la roue et donnant un signal lorsque l'état de rotation de la roue correspond à des paramètres prédéterminés, l'organe de manoeuvre par pression (28) comprenant un corps (30) d'organe de manoeuvre ayant un trou (32) qui possède un premier passage (42) de fluide qui communique avec le frein de roue, un piston (44) monté afin qu'il puisse coulisser de manière étanche dans le trou du corps en formant un volume variable de réglage communiquant avec le frein de roue et modulant la pression dans ce volume, un écrou (46) associé au piston et monté afin qu'il coulisse dans le trou sans pouvoir tourner, une vis motrice (48) passant dans l'écrou et coopérant par vissage avec lui, la vis motrice ayant un axe fixe de rotation par rapport au piston, et un moteur réversible (50) destiné à entraîner la vis motrice, le moteur réversible étant commandé par les signaux provenant de l'organe de commande, caractérisé par un manchon (120) qui ne peut pas tourner et qui est placé entre la vis motrice (48) et le moteur réversible (50) en position fixe, le manchon ayant un diamètre interne qui a une première valeur, un ressort hélicoïdal (130) ayant un diamètre externe libre qui a une seconde valeur supérieure ou égale de façon générale à la première valeur, le ressort hélicoïdal étant retenu dans le manchon et ayant une patte (132) à chaque extrémité, un organe d'entraînement (100) ayant une partie (152) de transfert de torsion dépassant dans le manchon, l'organe d'entraînement ayant un axe de rotation, l'organe d'entraînement ayant une position angulaire correspondant à celle du moteur réversible, l'organe d'entraînement ayant des première et seconde surfaces de contact (104) destinées à venir au contact des pattes de manière que celles-ci se déplacent vers l'intérieur et permettent au ressort hélicoïdal de présenter un mouvement de coulissement dans le manchon dans les deux sens, un organe mené (86) ayant une position angulaire qui correspond à celle de la vis motrice, l'organe mené ayant un axe de rotation coïncidant avec celui de l'organe d'entraînement et l'organe mené ayant une partie (182) de transfert de torsion destinée à être au contact de la partie (152) de transfert de torsion de l'organe d'entraînement pour le transfert du couple de l'organe d'entraînement à la vis motrice, l'organe mené ayant au moins une surface de contact avec la patte du côté (138) de la patte qui est opposé à celui qui est au contact de la surface de contact de l'organe d'entraînement de manière que le ressort héli- coïdaI présente une dilatation radiale et se bloque dans le manchon et empêche ainsi le transfert du couple de la vis motrice au moteur réversible lorsque le piston est soumis à la pression du fluide, mais lorsque l'état de rotation de la roue est en dehors des plages de paramètres prédéterminées.

2. Modulateur de pression comprenant un organe de manoeuvre par pression selon la revendication 1 et un organe de commande (18) qui est avisé de l'état de rotation de la roue (14) et qui transmet le signal au moteur réversible (50) lorsque l'état de rotation est compris dans la plage des paramètres préréglés pour la modulation de la pression dans le cylindre de roue (16).

3. Système de freinage antiblocage (ABS) comprenant un modulateur de pression selon la revendication 2, un maître-cylindre (12) destiné à transmettre un fluide sous pression, le frein de roue (16) recevant du fluide sous pression du maître-cylindre et étant destiné à limiter le mouvement de rotation de la roue (14), et une soupape d'isolement (24) commandée par le signal d'activation donné par l'organe de commande et destinée à empêcher la communication du fluide entre le maître-cylindre et le frein de roue.

4. Système de freinage antiblocage selon la revendication 3, dans lequel l'organe de manoeuvre (28) a un second passage de fluide (40) qui communique avec la soupape d'isolement (24) et un troisième passage de fluide (34) qui communique directement avec le maître-cylindre (12).

5. Système de freinage antiblocage selon la revendication 4, dans lequel l'organe de manoeuvre (28) a un clapet anti-retour de retenue (38) placé dans le troisième passage (34) de fluide et destiné à régler la communication du fluide entre le maître-cylindre (12) et le frein de roue (16), le piston (44) étant au contact du clapet de retenue en position d'extrémité afin que le clapet soit ouvert.

6. Système de freinage antiblocage selon l'une quelconque des revendications 3 à 5, dans lequel l'organe d'entraînement (100) est raccordé à demeure à un arbre (88) de rotor du moteur réversible (50), et le manchon (120) est adjacent de façon générale au moteur réversible, et l'organe mené (86) est un pignon d'un train d'engrenages (80) raccordé à la vis motrice (48).

7. Système de freinage antiblocage selon la revendication 6, dans lequel la partie (152) de transfert de torsion de l'organe d'entraînement (100) est symétrique de façon générale et est équilibrée en rotation.

8. Système de freinage antiblocage selon la revendication 6 ou 7, dans lequel le pignon (86) flotte axialement le long de l'axe de rotation par rapport au moteur réversible (50).

9. Système de freinage antiblocage selon l'une quelconque des revendications 3 à 8, dans lequel l'organe d'entraînement (100) a un flasque (110) placé à une première extrémité et destiné à positionner axialement le ressort héli- coïdaI (130).

10. Système de freinage antiblocage selon la revendication 9, dans lequel l'organe mené (86) a un flasque (180) de positionnement axial du ressort hélicoïdal (130).

11. Système de freinage antiblocage selon l'une quelconque des revendications 3 à 10, dans lequel l'organe mené (86) peut s'inverser d'une amplitude prédéterminée depuis sa position lorsque l'organe d'entraînement (100) entraîne l'organe mené avant que la partie de transfert de torsion (182) de l'organe mené ne soit au contact de la patte (132) pour limiter la rotation de la vis motrice (48), et la patte (132) est isolée du contact de l'organe mené lorsque l'organe d'entraînement transfère un couple à l'organe mené.

12. Système de freinage antiblocage selon l'une quelconque des revendications 3 à 11, dans lequel la partie (182) de transfert de torsion de l'organe mené (86) placée dans le manchon (120) est symétrique de façon générale et est équilibrée en rotation.

13. Système de freinage antiblocage selon l'une quelconque des revendications 3 à 12, dans lequel les surfaces de contact (104) de l'organe d'entraînement (100) sont arrondies.

14. Système de freinage antiblocage selon l'une quelconque des revendications 3 à 13, dans lequel les pattes (132) sont tournées de façon générale en direction radiale vers l'intérieur.

15. Système de freinage antiblocage selon la revendication 14, dans lequel l'une des pattes (132) a un rayon de courbure approximativement égal à son épaisseur.

16. Système de freinage antiblocage selon la revendication 14 ou 15, dans lequel chaque patte (132) a une partie rectiligne (136) de façon générale à sa partie radiale la plus interne (134) et la surface de contact (104) de l'organe d'entraînement (100) est au contact de la partie rectiligne de façon générale.

17. Système de freinage antiblocage selon la revendication 16, dans lequel la surface de contact (104) applique une force à la partie radiale la plus interne (134) de la patte (132) perpendiculairement à la partie radiale la plus interne.

18. Système de freinage antiblocage selon la revendication 16 ou 17, dans lequel la surface de contact (104) applique une force à la patte (132) passant par le centre de percussion (137) de la patte afin que la vibration de la patte soit minimale lorsque la patte est entraînée par l'organe d'entraînement (100).

19. Système de freinage antiblocage selon l'une quelconque des revendications 16 à 18, dans lequel la partie rectiligne de façon générale (136) dépasse en formant un angle inférieur à 90_{°} lors de l'intersection avec le rayon du manchon (120).

20. Système de freinage antiblocage selon l'une quelconque des revendications 3 à 19, dans lequel le ressort hélicoïdal (130) a une section rectangulaire.
